# EUROPEAN PATENT APPLICATION

(11) **EP 1 840 140 A1**
(43) Date of publication of application: **03.10.2007**
(21) Application number: 06112036.6
(22) Date of filing: 30.03.2006
(51) Int. Cl.: C08F 10/00, C08F 10/02

(54) **Method for making a transition between polymer grades**

(71) Applicant: TOTAL PETROCHEMICALS RESEARCH FELUY, 7181 Seneffe (Feluy) (BE)
(72) Inventor: Moers, Marc, B-2060, Antwerpen (BE); Van Looveren, Lieven, B-3891, Mielen-boven-Aalst (Gingelom) (BE); Wijffels, Mathias, B-2000, Antwerpen (BE)

(57) **Abstract**

The present invention relates to a method of transition between polymer grades in a polymerisation process comprising polymerising at least one monomer in at least a first reactor and a second reactor connected to each other in series, wherein the monomer feed in the first reactor is maintained essentially constant during the transition.

## Description

### FIELD OF THE INVENTION

The present invention relates to a method of transition between polymer grades in a polymerisation process comprising polymerising at least one monomer in at least a first reactor and a second reactor connected to each other in series.

### BACKGROUND OF THE INVENTION

A polymerisation process is a continuous process and the change from one polymer grade to another is typically made by changing the reaction conditions while at the same time producing polymer. This change is called a transition and it is in this description considered to start at time 0 (t=0), when the first grade polymer product is on-specification, that is, the reactor is producing a polymer that is within the specifications set for it. The reaction conditions are then gradually changed and thus if the second grade is highly different from the first grade, polymer that is off-specification, i.e. not within the specifications of either the first or the second grade, is produced. The transition is considered finished when the reactor produces the second grade, i.e. a polymer that is within the specifications set for said second grade. During a transition, the parameters that are typically changed are selected from temperature, feed of monomer, feed of comonomer, feed of hydrogen, feed of cocatalyst or feed of catalyst.

In a process comprising two or more reactors in series, monomer is firstly polymerised in a first reactor and then passed into a second reactor wherein the polymerisation continues. The transitions in this kind of process are at the moment made by changing the reaction conditions in both reactors at the same time. The changes made in both reactors at the same time however leads to an important degree of fluctuation of the properties of the polymer products, such as fluctuations in the melt index of the polymer, as well as to an important amount of product that is off-specification.

### OBJECTS AND SUMMARY OF THE INVENTION

It is an object of the present invention to provide a method of making a transition while reducing the time required for it. Another object of the invention is to provide a method for transition wherein the fluctuations in the properties of the polymers formed are minimised. A further object of the present invention is to provide a method for transition that enables a reduction in the amount of polymer that is off-specification.

At least one of the above objects is at least partially achieved by the means of the present invention, namely a method of transition between polymer grades in a polymerisation process comprising polymerising at least one monomer in at least a first reactor and a second reactor connected to each other in series, wherein the monomer feed into the first reactor is maintained essentially stable during the transition.

### DETAILED DESCRIPTION OF THE INVENTION

The invention relates to a method of transition between polymer grades in a polymerisation process comprising polymerising at least one monomer in at least a first reactor and a second reactor connected to each other in series, wherein the monomer feed into the first reactor is maintained essentially constant during the transition.

The present invention thus provides a method for making a transition in such a manner that the fluctuations in the reactors are minimised, the amount of off-specifications is reduced significantly and the time required for the transition is also reduced.

The number of reactors used in the present invention can be two, three, four, five, six or more. Typically, the monomer feed in the first reactor is not changed, whereas the other feeds can be changed. The other feeds are based on, for example, the hexane/monomer ratio or the hydrogen/monomer ratio. According to the present invention, the monomer feed in the first reactor is kept essentially constant. By essentially constant it is meant that the monomer feed in the first reactor is changed at most by 5 % during the transition. According to another embodiment, the monomer feed in the first reactor is changed at most by 2 % during the transition. According to a preferred embodiment, the monomer feed in the first reactor is changed at most by 1 % during the transition.

According to an embodiment, the polymerisation process is carried out using a metallocene catalyst, a chromium-type catalysts and/or a Ziegler-Natta catalysts. Ziegler-Natta catalysts are preferred.

The invention can be used in the polymerisation of any desired monomer. However, according to an embodiment of the invention, the polymer grades are polyolefin grades. In this case, the monomers are olefins, such as ethylene, propylene, 1-butene, 1-hexene, 4-methyl 1-pentene, 1-heptene and 1-octene. Any mixtures of these monomers can also be used. The term polymerisation here refers thus to both homopolymerisation and copolymerisation. Other alpha-olefinic comonomers comprising 3 to 10 carbon atoms than those mentioned above can also be used.

According to another embodiment the polyolefin grades are multimodal polyolefin grades, that is, different resins are formed in different reactors. By multimodal, it is meant bimodal, trimodal etc. When multimodal polymers are manufactured, the method according to the invention can also be used in such a way that while the monomer feed in the first reactor is kept essentially constant, the amount of polymer formed in the second reactor is increased or decreased, depending in the required change of ratio of the two resins in the final polymer product.

In a particularly preferred embodiment, the invention relates to a method for making a transition in a polymerisation process wherein polyethylene, preferably bimodal polyethylene is prepared. The polymerisation process in the present invention is preferably carried out in the liquid phase (slurry process), or in the gas phase.

In the liquid slurry process, the liquid comprises ethylene and/or propylene, and where required one or more alpha-olefinic comonomer comprising from 3 to 10 carbon atoms, in an inert diluent. The comonomer may be selected from 1-butene, 1-hexene, 4-methyl 1-pentene, 1-heptene and 1-octene. The inert diluent is preferably isobutane. Other compounds such as a metal alkyl or hydrogen may be introduced into the polymerisation reaction to regulate activity and polymer properties such as melt flow index. In one preferred process of the present invention, the polymerisation process is carried out in two loop reactors, preferably in two liquid-full loop reactors.

The method of the invention is also suitable for gas phase polymerisation. The gas phase polymerisation can be performed in two or more fluid bed or agitated bed reactors. The gas phase comprises ethylene and/or propylene, if required an alpha-olefinic comonomer comprising 3 to 10 carbon atoms, such as 1-butene, 1-hexene, 4-methyl-1-pentene, 1-octene or mixture thereof as well as inert gas such as nitrogen. Optionally a metal alkyl can also be injected into the polymerisation medium, as well as other reaction controlling agents such as hydrogen or oxygen. Optionally a hydrocarbon-diluent such as pentane, isopentane, hexane, isohexane, cyclohexane or mixture thereof can be used.

During a transition, a parameter that can be changed is, for example, the amount of hexene injected in the first reactor, which can vary between 10 and 120 kg/t of polymer produced. Moreover, the ethylene off-gas (in the first reactor and second reactors) can vary up to 20 %. The hydrogen injection/off-gas (mostly in the second reactor) can vary up to 35 %, the reactor temperature up to 5°C, i.e. approximately up to 5 % and the reactor ratio (tons made in second reactor vs. first reactor) up to 10 %. These values are only given as a general indication and it is clear to a person skilled in the art which values should be used for any given transition.

More stability can be obtained if the monomer off-gas/monomer feed in the first reactor is kept constant, that is, the other injections (hydrogen, comonomer, etc.) are dosed as a ratio to the monomer. Keeping the flow of monomer i.e. the monomer feed constant thus enables changes in injection of the other parameters to be done without major disturbances and fluctuations.

As an example, it can be mentioned that when a transition according to the prior art is made in a polymerisation process having a production rate of approximately 30 t/h, the amount of off-specification that is formed is about 200-500 t and the time required is about 12-20 hours. With the method according to the present invention, these values can be reduced by up to 50 %, i.e. down to 100 t of off-specification and 8 hours in transition time.

## Claims

1. A method of transition between polymer grades in a polymerisation process comprising polymerising at least one monomer in at least a first reactor and a second reactor connected to each other in series, **characterised in that** the monomer feed into the first reactor is maintained essentially constant during the transition.

2. Method according to claim 1, **characterised in that** the polymer grades are polyolefin grades.

3. Method according to claim 2, **characterised in that** the polyolefin grades are multimodal polyolefin grades.

4. Method according to claim 2 or 3, **characterised in that** the polyolefin grades are polyethylene grades.

5. Method according to any of the previous claims, **characterised in that** the feed of monomer into the first reactor is changed at most 1 % during the transition.

6. Method according to any of the previous claims, **characterised in that** the polymerisation reactors are loop reactors.

7. Method according to any of the claims 2-6, **characterised in that** the polymerisation process is carried out using a Ziegler-Natta catalyst.
